# EUROPEAN PATENT APPLICATION

(11) **EP 4 672 385 A1**
(43) Date of publication of application: **31.12.2025**
(21) Application number: 25192103.7
(22) Date of filing: 20.11.2024
(51) Int. Cl.: H01M 4/86, H01M 4/90, H01M 4/92, H01M 8/083, H01M 8/10, H01M 8/18

(54) **OXYGEN ELECTRODE CATALYTIC LAYER FOR REVERSIBLE, ALKALINE OR ANION EXCHANGE MEMBRANE ELECTROCHEMICAL DEVICES**

(30) Priority: 18.12.2023 IL 30951023
(62) Divisional of application: 24214354.3
(71) Applicant: HYDROLITE LTD, 3088900 Caesarea (IL)
(72) Inventor: KATTAN, Mordechai, 3760126 14 Savion St., Harish (IL); ASHDOT, Aviv, 3032237 17 Shoshanat Hayam St., Atlit (IL); TIURIN, Burshtein, 3750452 Ortal; 8 Seora St., Pardes Hannah (IL); AZRA, Charly David, 3786100 20 Etrog St., Apt 5. Harish (IL); TAL-GUTELMACHER, Ervin, 4502547 21 Asirei Zion St., Hod Hasharon (IL)
(74) Representative: Pearl Cohen Zedek Latzer Baratz UK LLP

(57) **Abstract**

Oxygen electrodes, production methods and alkaline or anion exchange membrane (AEM) electrolyzer are provided. The oxygen electrodes are operable as anodes of an electrolyzer supporting an oxygen evolution reaction (OER). The oxygen electrodes comprise a substrate layer which may be a porous transport layer (PTL), possibly coated and/or hydrophobized, or a membrane; and a blend of catalysts which is deposited on the substrate layer to form a catalyst layer, and includes ORR catalyst (e.g., a platinum group metal), OER catalyst (e.g., nickel-based particles), and possibly binders such as ionomers, PTFE or other polymers that are resistant in alkaline environment, but with the catalyst layer and the substrate layer being devoid of elemental carbon.

## Description

### BACKGROUND OF THE INVENTION

### 1. TECHNICAL FIELD

The present invention relates to the field of reversible electrochemical devices, and more particularly, to oxygen electrodes therefore.

### 2. DISCUSSION OF RELATED ART

Intensive research is conducted in the field of electrochemical devices towards developing and improving fuel cells and electrolyzers. A crucial component in these is the oxygen electrode, which catalyzes oxygen reduction and oxygen generation, respectively, in these devices.

For example, U.S. Patent Application Publication No. 20210028465, which is incorporated herein by reference in its entirety, discloses Catalyst material for a fuel cell or an electrolyser, which comprises a doped manganese oxide, a NiFe intercalation compound and a conductive carrier material, wherein the doped manganese oxide and the NiFe intercalation compound are supported on the conductive carbon-containing carrier material.

### SUMMARY OF THE INVENTION

The following is a simplified summary providing an initial understanding of the invention. The summary does not necessarily identify key elements nor limit the scope of the invention, but merely serves as an introduction to the following description.

One aspect of the present invention provides an oxygen electrode for a reversible, alkaline or anion exchange membrane (AEM) electrochemical device that is operable both as a fuel cell with the oxygen electrode supporting an oxygen reduction reaction (ORR) as a cathode of the fuel cell, and as an electrolyzer with the oxygen electrode supporting an oxygen evolution reaction (OER) as an anode of the electrolyzer, the oxygen electrode comprising a substrate layer that is devoid of elemental carbon, and a catalyst layer comprising a blend of an ORR catalyst comprising at least one platinum group metal (PGM) and an OER catalyst comprising at least nickel-based particles, the catalyst layer being devoid of elemental carbon and deposited on the substrate layer.

One aspect of the present invention provides a dual, reversible, alkaline or anion exchange membrane (AEM) electrochemical device that is operable both as a fuel cell and as an electrolyzer, with the device comprising disclosed oxygen electrodes and an electrode supporting a hydrogen oxidation reaction (HOR) when the device is operated as the fuel cell, and hydrogen evolution reaction (HER) when the device is operated as the electrolyzer.

One aspect of the present invention provides a method of preparing an oxygen electrode for a reversible, alkaline or anion exchange membrane (AEM) electrochemical device that is operable both as a fuel cell with the oxygen electrode supporting an oxygen reduction reaction (ORR) as a cathode of the fuel cell, and as an electrolyzer with the oxygen electrode supporting an oxygen evolution reaction (OER) as an anode of the electrolyzer, the method comprising blending an ORR catalyst comprising at least one platinum group metal (PGM) and an OER catalyst comprising at least nickel-based particles, the blend being devoid of elemental carbon, and depositing the blend on a substrate layer to form the oxygen electrode.

These, additional, and/or other aspects and/or advantages of the present invention are set forth in the detailed description which follows, possibly inferable from the detailed description, and/or learnable by practice of the present invention.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout. In the accompanying drawings:
**Figures 1A-1D** are high-level schematic illustrations of oxygen electrodes in reversible, alkaline or anion exchange membrane (AEM) electrochemical devices, according to some embodiments of the invention.
**Figure 2** is a high-level flowchart illustrating a method, according to some embodiments of the invention.
**Figure 3** is a SEM (scanning electron microscopy) image of an oxygen electrode indicating PTL fibers coated by catalyst blend, according to some embodiments of the invention.
**Figure 4** provides an example for the operation of the device, plotting voltage and power with respect to current, according to some embodiments of the invention.
**Figures 5A** and **5B** provide experimental results with different amounts of LDH in the catalyst blend, according to some embodiments of the invention.
**Figures 5C** and **5D** provide experimental results for four cycles between electrolyzer and fuel cell modes of operation, according to some embodiments of the invention.
**Figure 6A** and **6B** provide experimental results concerning the operation of devices with oxygen electrodes made with different catalyst blend compositions, according to some embodiments of the invention.
**Figure 7A** and **7B** provide comparative experimental results concerning the operation of devices with oxygen electrodes made without LDH in the catalyst blend, according to some embodiments of the invention.
**Figure 7C** illustrates an oxygen electrode which showed low performance and instability of the voltage over time.
**Figure 8** provides an experimental example for operating the reversible device with oxygen electrodes using dry oxygen for the fuel cell operation, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention may be practiced without the specific details presented herein. Furthermore, well known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein are for the purpose of description and should not be regarded as limiting.

Some embodiments of the present invention provide efficient and economical methods and mechanisms for configuring oxygen electrodes and thereby provide improvements to the technological field of reversible, alkaline or anion exchange membrane (AEM) electrochemical devices. Oxygen electrodes, production methods and reversible, alkaline or AEM electrochemical devices are provided. The oxygen electrodes are operable in the reversible devices both as cathodes of a fuel cell supporting an oxygen reduction reaction (ORR), and as anodes of an electrolyzer supporting an oxygen evolution reaction (OER). The oxygen electrodes comprise a substrate layer which may be a porous transport layer (PTL), possibly coated and/or hydrophobized, or a membrane; and a blend of catalysts which is deposited on the substrate layer to form a catalyst layer, and including ORR catalyst (e.g., a platinum group metal), OER catalyst (e.g., nickel-based particles), and possibly binders such as ionomers, PTFE or other polymers resistant in alkaline environment, but with the catalyst layer and the substrate layer being devoid of elemental carbon. It is noted that while carbon is an essential component of prior art fuel cell layers which provides conductivity and gas transport properties, disclosed catalyst layers are designed to work without elemental carbon (contrary, e.g., to prior art such as U.S. Patent Application Publication No. 20210028465 that was referred to above) - to avoid corrosion at voltages larger than 1V during operation of the reversible device as an electrolyzer. It is noted that being devoid of elemental carbon, disclosed catalyst layers and electrodes do not include elemental carbon in form of pure carbon which is not combined with other elements. However, disclosed catalyst layers and electrodes may comprise carbon as a structural polymer backbone, combined with other elements such as H, O, F, etc., e.g., in various polymer binders.

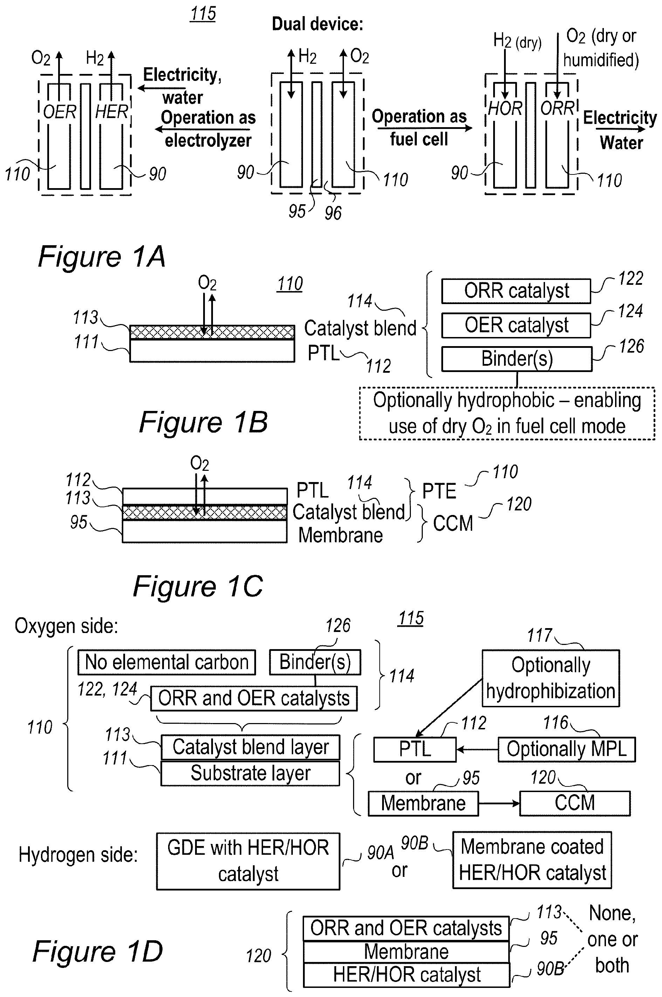

**Figures 1A-1D** are high-level schematic illustrations of oxygen electrodes **110** in reversible, alkaline or an anion exchange membrane (AEM) electrochemical devices **115,** according to some embodiments of the invention. **Figure 1A** schematically illustrates dual, reversible, alkaline or AEM electrochemical devices **115** which are operable both as a fuel cell (receiving hydrogen and oxygen to generate electrical power, and water as byproduct) with oxygen electrode **110** supporting an oxygen reduction reaction (ORR), and as an electrolyzer (receiving water to generate hydrogen and oxygen, using supplied electrical power) with oxygen electrode **110** supporting an oxygen evolution reaction (OER). ORR and OER are carried out using corresponding catalysts that promote and control the respective reactions. In various embodiments, the OER catalyst is selected to not degrade, or to degrade slowly, during fuel cell operation of device **115,** and the ORR catalyst is selected to not degrade, or to degrade slowly, during electrolyzer operation of the device - to provide a predefined number of cycles for devices **115,** e.g., several hundreds of cycles, several thousands of cycles, or more. Oxygen used for fuel cell operation may be humidified or dry. Hydrogen used for fuel cell operation may be humidified or dry. In various embodiments, either hydrogen and/or oxygen may be used in dry or humidified state, depending on the operation conditions and device configurations.

Devices **115** are operable with a hydrogen electrode **90** supporting a hydrogen oxidation reaction (HOR) when device **115** is operated as the fuel cell, and hydrogen evolution reaction (HER) when device **115** is operated as the electrolyzer. Hydrogen electrode **90** may comprise, e.g., a gas diffusion electrode (GDE) **90A** (see **Figure 1D**) comprising a catalyst-coated GDL (gas diffusion layer) or a catalyst-coated CCM (with HER/HOR catalyst coated on the opposite side of the membrane - denoted **90B** in **Figure 1D** - with respect to the coated OER/ORR catalyst). A membrane **95** (e.g., polymeric, as separator and/or ionomeric) and/or alkaline electrolyte **96** (e.g., KOH, with or without membrane **95,** possibly with porous membrane **95** allowing flow-through of the electrolyte) separate electrodes **90, 110,** with membrane **95** possibly configured as an anion exchange membrane, or optionally as separator. It is noted that the oxygen and hydrogen electrodes include respective GDLs and corresponding catalyst layers (OER/ORR catalysts and HER/HOR catalyst respectively) - which may however be coated on either the respective GDL or on the respective side of membrane **95** which separates the electrodes.

Devices **115** may be further configured to receive hydrogen (e.g., from a hydrogen unit, possibly compressed), oxygen (e.g., from an oxygen unit, possibly compressed), water, dilute electrolyte and/or additional electrolyte from respective reservoirs, and have power connection(s) to receive and deliver power during electrolyzer and fuel cell operation, respectively. Various further details concerning configuration embodiments of devices **115** are disclosed in U.S. Patent Application Publication No. 20230098124, which is incorporated herein by reference in its entirety.

**Figure 1B** schematically illustrates oxygen electrodes **110,** which comprise a substrate layer **111** (e.g., either a porous transport layer PTL **112** or a membrane **105**), and a blend of catalysts **114** deposited thereupon to form a catalyst layer **113.** Catalyst layer **113** may comprise an ORR catalyst **122** comprising at least one platinum group metal (PGM), an OER catalyst **124** comprising at least nickel-based particles, such as nickel nanoparticles, Raney nickel, NiFeLDH (layered double hydroxide), Ni oxides, Ni hydroxides Please provide additional examples for nickel and nickel-based compounds such as NiFe₂O₄, Ni-Mo catalysts, Ni-Co catalysts or Ni-Mo-Co catalysts, or other nickel-based compounds; and binder(s) **126.** Catalyst blend **114** and catalyst layer **113** are devoid of elemental carbon or any other support, providing the advantage of more robust electrolyzer operation due to avoidance of carbon electro-corrosion at voltages above 1 V during electrolyzer operation. Catalyst layer **113** may be applied to substrate layer **111** in a way that ensures sufficient catalyst activity with respect to particle structure and catalyst loading.

In certain embodiments, oxygen electrode **110** and electrochemical devices **115** may be configured to operate on dry oxygen during fuel cell operation of the device (e.g., with hydrophobized substrate layer for the catalyst blend). Specifically, hydrophobic binder(s) **126** such as PTFE may be used to form hydrophobic catalyst layer **113** that enables operation with dry oxygen in fuel cell mode. In various embodiments, hydrophobic catalyst layer **113** may be configured to operate with humidified oxygen. Alternatively, catalyst layer **113** may be configured to be non-hydrophobic and operate with humidified oxygen, e.g., with high throughputs.

In various embodiments, the relative humidity (RH) may range between 0%-100%, or any subrange or intermediate value thereof. In particular, disclosed embodiments of catalyst layer **113** and its being devoid of elemental carbon enable operation of devices **115** in electrolyzer mode with dry oxygen, having 0-20% RH, 0-10% RH, <5% RH, <1% RH or even 0 RH, with hydrophobic binder(s) **126.**

Catalyst blend **114** may further comprise one or more binder(s) **126** such as ionomer material(s), hydrophobic polymers (e.g., PTFE) and/or inert binder polymers that are resistant to alkaline environment. Non-limiting examples for ionomers include continuous anion conducting ionomer (for AEM implementations) comprising, e.g., polymers or copolymers of (vinylbenzyl)trimethylammonium chloride, wherein the chloride counterion may be exchanged to any desired anion, copolymers of diallyldimethylammonium chloride (DADMAC), wherein the counterion may be exchanged to any desired anion, styrene-based polymers having quaternary ammonium anion conducting group, quaternized poly(vinylalcohol) (QPVA), bi-phenyl (BP) or tri-phenyl (TP) backboned polymers with one or more functional groups that could include alkyl tether group(s) and/or alkyl halide group(s) and/or equivalent groups, poly(arylpiperidinium) (PAP) and other polymers containing cyclic quaternary ammonium in the backbone or on tethered sidechains, poly(bis-arylimidazoliums), cation-functionalized poly(norbornenes), neutral polymers or polymer membranes with grafted anion-conductive sidechains, or any other anion-conducting polymer. In some embodiments, the anion conducting ionomer may be crosslinked, e.g., using crosslinking agent(s) selected according to the type of the ionomer to be crosslinked, such as divinylbenzene, N,N,N',N'-tetramethyl-1,6-hexanediamine (TMHDA), 1,4-diazabicyclo[2.2.2]octane (DABCO), glyoxal, glutaraldehyde, styrene based polymer(s) having quaternary ammonium anion conducting group(s), bi-phenyl or tri-phenyl backboned with one or more functional groups that could include alkene tether group(s) and/or alkyl halide group(s) and/or equivalent groups, hydrocarbon chains, sulfur groups, siloxy groups, N-hydroxybenzotriazole groups, azide groups and the like. In some embodiments, the anion conducting ionomer may be a blend of several polymers, some of which may not be anion conducting.

**Figure 1C** schematically illustrates oxygen electrodes **110** that are part of a catalyst coated membrane (CCM) **120,** with catalyst blend **114** being deposited or attached as catalyst layer **113** to one side of membrane **95** to form CCM **120,** so that CCM **120** is coated on one side by blend **114** of ORR catalyst **122** and OER catalyst **124.** Catalyst layer **113** contacts PTL **112** on the other side of deposited catalyst layer **113.** In CCM configurations, membrane **95** may be coated on one side only (by catalyst blend **114** forming catalyst layer **113** and/or with HER/HRR catalyst on the other side of membrane **95**). Alternatively, oxygen electrodes **110** may be configured as PTE (porous transport electrode) on PTL **112** as substrate, with membrane **95** adjacent to catalyst layer **113.** In either case, CCM **120** or PTE **110** may be hydrophobic (e.g., with hydrophobic binder such as PTFE as part of catalyst layer **113**), may operate with dry oxygen or with humidified oxygen in fuel cell mode; or CCM **120** or PTE **110** may be non-hydrophobic, operating with humidified oxygen, e.g., at high throughputs.

**Figure 1D** summarizes schematically various embodiments and disclosed configurations of oxygen electrodes **110,** including as substrate layer **111,** e.g., PTL **112** or membrane **95.** PTL **112** may be made of nickel, stainless steel, titanium, alloys thereof and/or combinations thereof. PTL **112** may optionally be coated by a microporous layer (MPL) **116,** e.g., made of a similar metal as PTL **112,** attached thereto and having a predefined pore size distribution). Alternatively or complementarily, PTL **112** may be hydrophobized **117,** e.g., by treatment with polytetrafluoroethylene (PTFE) or with alkylsilanes to avoid flooding events. For example, hydrophobized PTL may enable or improve operation with dry oxygen (and/or hydrogen in the device), even at low flow rates. Hydrophobized PTL may also improve performance with humidified oxygen (and/or humidified hydrogen). Membrane **95** may be configured to form CCM **120** when coated on one or both of its sides, with the membrane providing substrate layer **111.**

Catalyst layer **113** that is coated over substrate layer **111** comprises catalyst blend **114** of ORR and OER catalysts **122, 124,** respectively, and binder(s) **126** such as ionomer materials(s), PTFE or alkylsilanes and/or other polymer material(s) that are resistant to alkaline environment. In any of the embodiments, catalyst layer **113** and catalyst blend **114** are devoid of elemental carbon. Oxygen electrode **110** with catalyst layer **113** may be hot-pressed briefly (e.g., a few minutes, e.g. between ten seconds to ten minutes, at around the glass temperature of the binder, e.g., within the temperature range of 80-180°C, or between 110°C and 140°C) to enhance its stability, homogeneity and increase its operational durability.

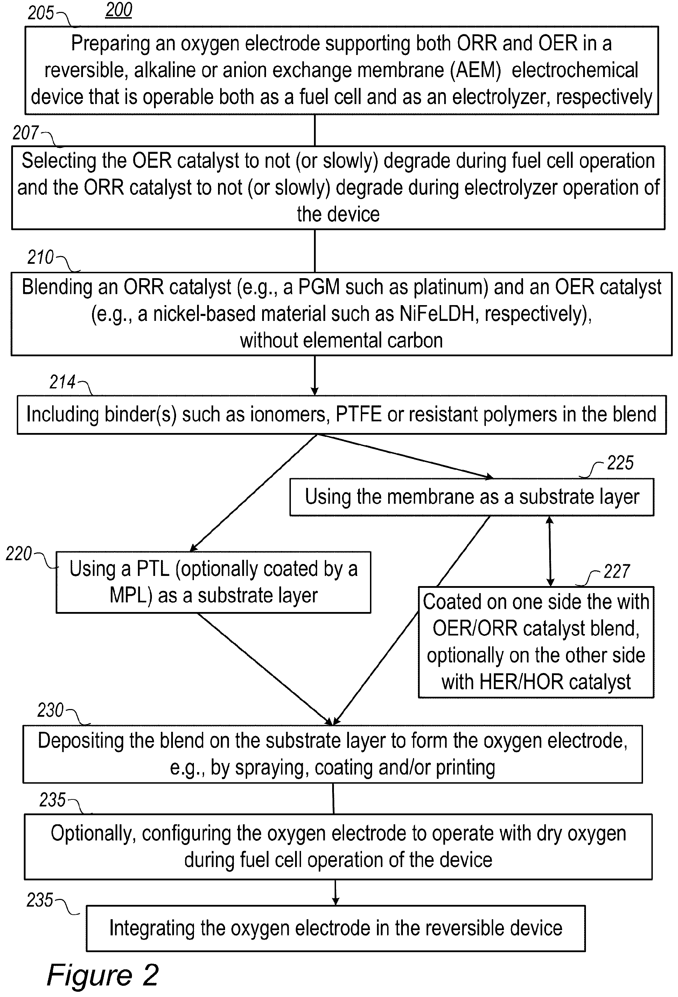

**Figure 2** is a high-level flowchart illustrating a method **200,** according to some embodiments of the invention. The method stages may be carried out with respect to oxygen electrodes **110** and reversible, alkaline or anion exchange membrane (AEM) electrochemical devices **115** described herein. Method **200** comprises preparing an oxygen electrode for a reversible, alkaline or AEM electrochemical device that is operable both as a fuel cell with the oxygen electrode as a cathode supporting an oxygen reduction reaction (ORR), and as an electrolyzer with the oxygen electrode as an anode supporting an oxygen evolution reaction (OER) (stage **205**), and may comprise the following stages, irrespective of their order. Method **200** may comprise selecting the OER catalyst to not degrade, or to degrade slowly, during fuel cell operation of the device, and the ORR catalyst to not degrade, or to degrade slowly, during electrolyzer operation of the device (stage **207**) - to provide a predefined number of cycles for operating the device, e.g., several hundreds of cycles, several thousands of cycles, or more.

Method **200** may comprise blending an ORR catalyst comprising at least one platinum group metal (PGM, e.g., platinum) and an OER catalyst comprising at least a nickel-based particle, e.g., NiFeLDH, the blend being devoid of elemental carbon (stage **210**), and depositing the blend on a substrate layer to form the oxygen electrode (stage **230**), e.g., by spraying, coating and/or printing. For example, liquid catalyst blend may be applied onto the substrate layer e.g., by any of spraying, electrospray coating, slot die casting, doctor blading, screen printing, inkjet printing, 3D printing, or combinations thereof and/or equivalent methods.

Blending **210** may further comprise including binder(s) in the blend such as ionomer(s), e.g., to provide ion conductivity, hydrophobic polymer(s) such as PTFE to increase hydrophobicity), and/or other polymer(s) which are resistant to the alkaline environment (stage **214**).

Non-limiting examples for ionomers for use as binder(s) **126** may include polymer and copolymers of cationic monomers such as (vinylbenzyl)trimethylammonium chloride, alkyl trimethylammonium chloride, diallyldimethylammonium chloride, piperidinium, pyrrolidinium and neutral monomers such as ethylene, butylene, styrene, isoprene, butadiene, phenylene. Functionalization from non-cationic to cationic group after deposition may be carried out e.g., by transforming a non-functional group to a functional group (e.g., transforming chloromethylated group(s) to trimethylammonium group(s). Functionalization may be followed by adding, e.g., trimethylamine (TMA) to initiate quaternization reaction(s).

Non-limiting examples for hydrophobic materials as binder(s) **126** may include polytetrafluoroethylene (PTFE).

Non-limiting examples for neutral materials as binder(s) **126,** which are stable in hot alkaline environment may include styrene-ethylene-butylene-styrene (SEBS), styrene-butadiene-styrene (SBS), polystyrene, polyethylene, polypropylene, ethylene-propylene copolymers, cyclic olefin copolymers (COC), and polyvinyl butyral.

The electrode (with the catalyst layer including the binder) may optionally be hot-pressed onto the electrode, e.g., as disclosed in U.S. Patent Application No. 18/075,490 and incorporated herein by reference in its entirety.

In some embodiments, method **200** may comprise using a PTL as the substrate layer (stage **220**). The PTL may optionally be coated by a MPL made of a similar metal as the PTL thereto, to provide a predefined pore size distribution to the substrate layer prior to the deposition of the blend thereupon.

In some embodiments, method **200** may comprise using a membrane as the substrate layer (stage **225**), forming a one-sided CCM with the oxygen electrode deposited as the catalyst layer on a side of the membrane that is in contact with the PTL, or a two-sided CCM, with the OER/ORR catalyst blend coated on one side of the CCM and HER/HOR catalyst on the other side of the CCM (stage **227**).

Method **200** may further comprise configuring the oxygen electrode to operate with dry oxygen during fuel cell operation of the device (stage **235**) and/or integrating the oxygen electrode in the reversible device (stage **240**).

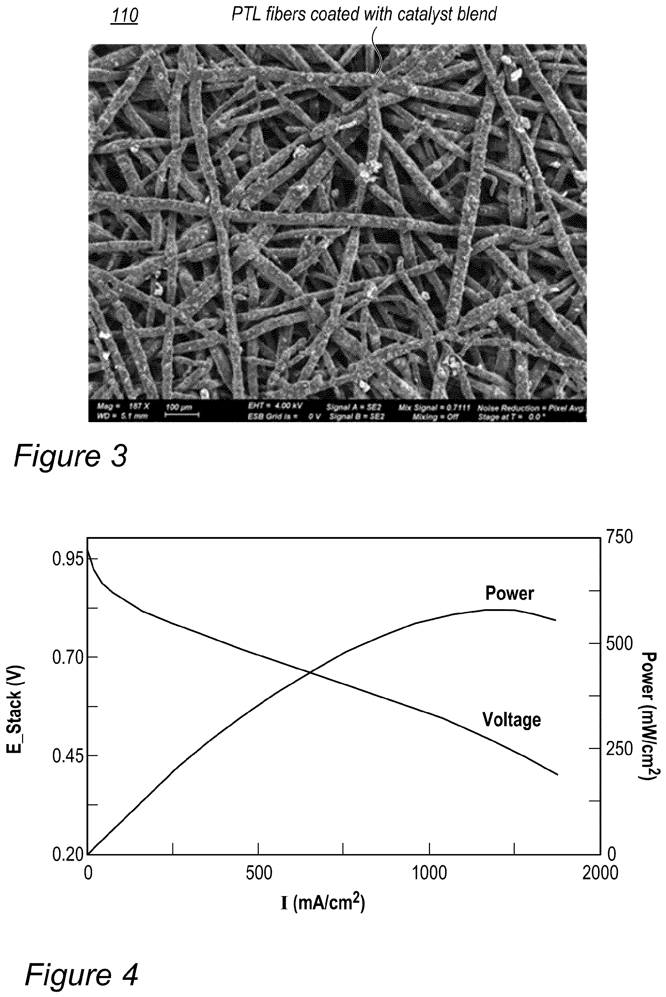

**Figure 3-8** provide experimental results indicating the efficiency and durability of oxygen electrodes **110** in electrochemical devices **115,** according to some embodiments of the invention. **Figure 3** is a SEM (scanning electron microscopy) image of oxygen electrodes **110** indicating PTL fibers coated by catalyst blend **114,** according to some embodiments of the invention. Illustrated catalyst layer **113** comprises a loading of 0.696 mg/cm² of platinum nanoparticles, 0.08 mg/cm² of NiFeLDH and 0.024 mg/cm2 of a bisphenyl piperidinium ionomer, and device **115** was operated with 0.05M KOH electrolyte **96** and operating temperature of 60°C. In the disclosed non-limiting example, the hydrogen electrode was made of a catalyst layer deposited on a carbon-based GDL. The catalyst layer contained 1.4 mg/cm² of platinum-ruthenium nanoparticles and 0.19 mg/cm² of a triphenylpiperidinium ionomer. The device was operated under oxygen in the fuel cell mode and 0.05 M KOH in the electrolyzer mode.

**Figure 4** provides an example for the operation of the device, plotting voltage and power with respect to current, according to some embodiments of the invention. The results indicate the operability of the device in the disclosed non-limiting example, with the catalyst layer coated on a PTL, with PTFE as binder.

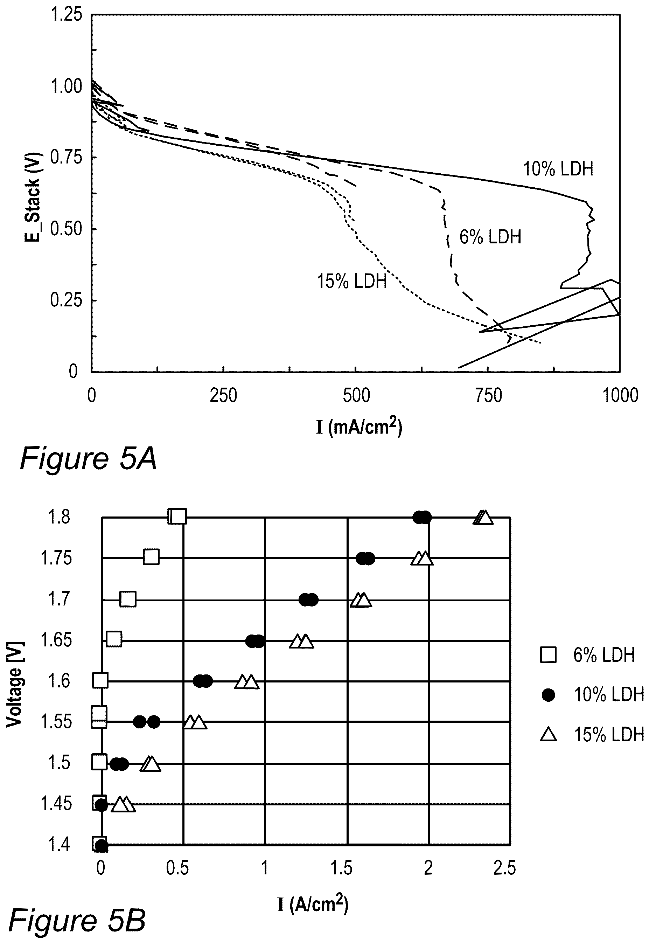

**Figures 5A** and **5B** provide experimental results with different amounts of LDH in the catalyst blend, according to some embodiments of the invention. NiFeLDH amounts of 6wt%, 10wt% and 15wt% versus Pt nanoparticles were compared with respect to cell performance as a fuel cell, illustrated in **Figure 5A****,** and with respect to cell performance as an electrolyzer (with device **115** operated at 60°C with an electrolyte throughput of 0.5 ml/min of 0.05M KOH) illustrated in **Figure 5B****.** As indicated in the data, the range of 6-15wt% NiFe LDH is operable in oxygen electrodes **110.** In certain embodiments, larger amounts of NiFe LDH, e.g., up to 40wt% or intermediate values may be used to prepare operable oxygen electrodes **110.** In the experiment, 0.694 mg/cm² Pt nanoparticles were used with 0.08 mg/cm² NiFeLDH and 0.024 mg/cm² ionomer, forming a catalyst loading of 0.8 mg/cm² with 10% LDH. For 6% LDH 0.728 mg/cm² Pt nanoparticles were used with 0.048 mg/cm² NiFeLDH and 0.024 mg/cm² ionomer, forming a catalyst loading of 0.8 mg/cm². And for 15% LDH, 0.656 mg/cm² Pt nanoparticles were used with 0.012 mg/cm² NiFeLDH and 0.024 mg/cm² ionomer.

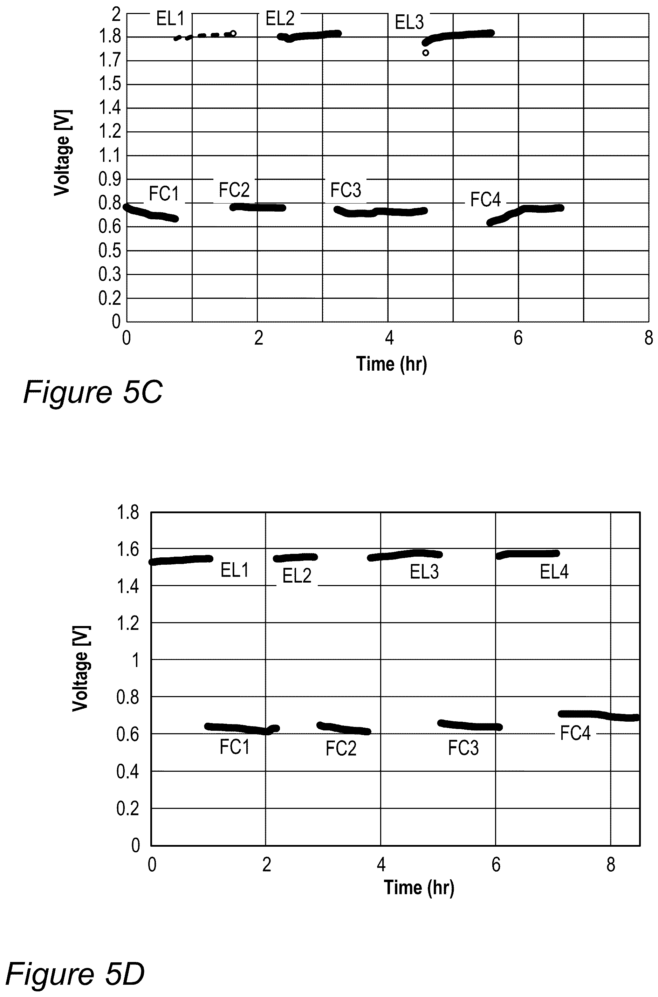

**Figures 5C** and **5D** provide experimental results for four cycles between electrolyzer (EL1, EL2, EL3 and EL4) and fuel cell (FC1, FC2, FC3 and FC4) modes of operation, according to some embodiments of the invention. **Figure 5C** provides data for catalyst blends without LDH, made with 0.776 mg/cm² Pt nanoparticles 0.024 mg/cm² ionomer, forming a catalyst loading of 0.8 mg/cm² and in **Figure 5D** the catalyst blend included 10wt% NiFeLDH (made as described for **Figures 5A** and **5B**)**.** The devices were operated with 0.05M KOH as electrolyte, as electrolyzer operated at 60°C with an electrolyte throughput of 0.5 ml/min of 0.05M KOH, dry hydrogen and humidified oxygen. Fuel cell operation temperature was 67°C. Both figures indicate stable electrolyzer voltages (**Figure 5C** - around 1.8V at 0.2A/cm², **Figure 5D** - at 1.55-1.6V at 0.2A/cm²) and fuel cell voltage (**Figure 5C** - 0.7-0.8V at 0.5A/cm², **Figure 5D** - 0.6-0.75V at 0.5A/cm²) - confirming the ability to cycle device **115** without degradation of the catalysts (with platinum nanoparticles, and with or without LDH).

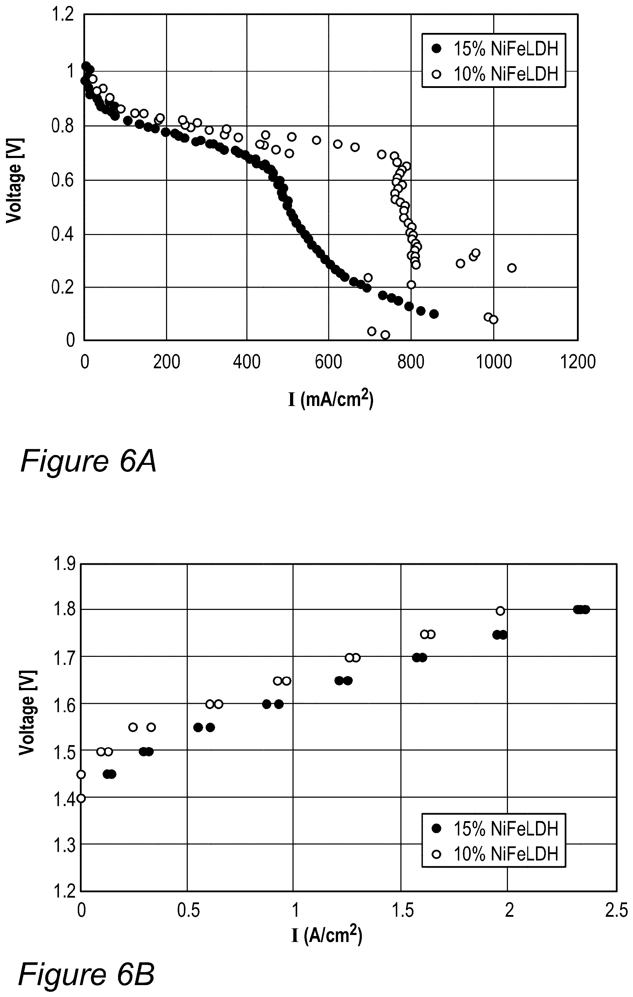

**Figure 6A** and **6B** provide experimental results concerning the operation of devices **115** with oxygen electrodes **110** made with different catalyst blend compositions, according to some embodiments of the invention. The results compare catalyst blend **114** having catalyst loading of 1.23 mg/cm² of platinum nanoparticles and 0.225 mg/cm² of NiFeLDH and 0.045mg/cm² ionomer (indicated as 15% NiFeLDH) with catalyst blend **114** having catalyst loading of 1.305mg/cm² of platinum nanoparticles and 0.15 mg/cm² of NiFeLDH and 0.045 mg/cm² ionomer (indicated as 10% NiFeLDH). **Figure 6A** indicates that the mass transport was better for the 10% NiFeLDH blend than with the 15% NiFeLDH blend, and **Figure 6B** indicates that the IV curve of the electrolyzer mode of operation provides better results for the 10% NiFeLDH blend compared with the 15% NiFeLDH blend. It is also noted that including LDH as part of catalyst blend **114** reduces the operation voltage in electrolyzer mode from about 1.9-2V (without LDH) to around 1.5V at 0.2A/cm² current density (with LDH, as indicated in **Figure 6B**). As electrolyzer, device **115** was operated at 60°C with an electrolyte throughput of 0.5 ml/min of 0.05M KOH.

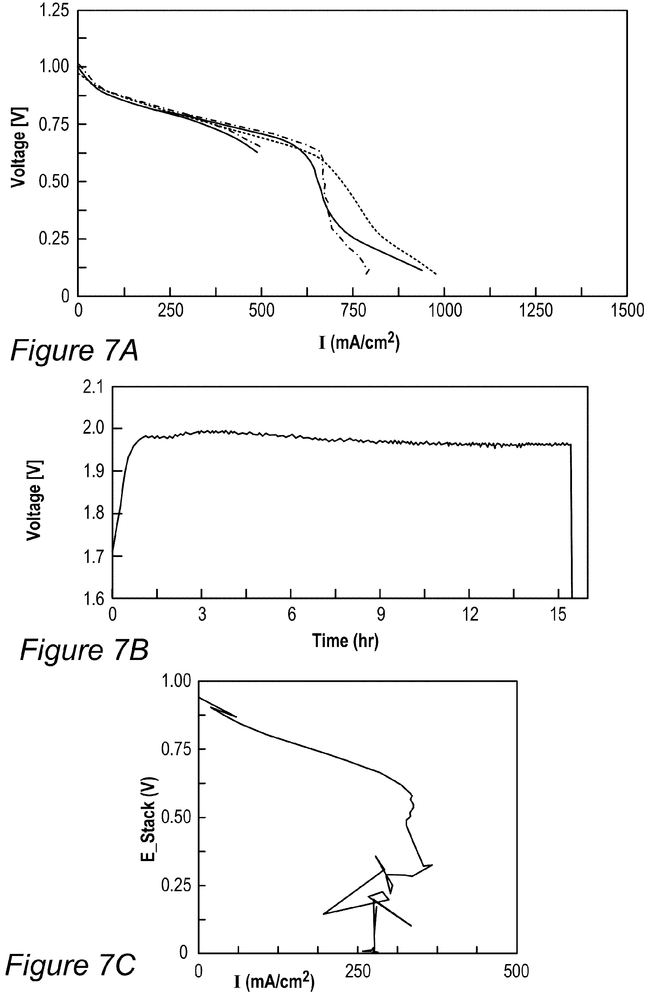

**Figure 7A** and **7B** provide comparative experimental results concerning the operation of devices **115** with oxygen electrodes **110** made without LDH in the catalyst blend, according to some embodiments of the invention. **Figure 7A** provides IV curves for three runs of the cell with Pt catalyst loading of 3 mg/cm², indicating a limitation of the current to 750-850 mA/cm² around 0.6V, possibly suggesting modifications of Pt catalyst loading, membrane thickness and/or electrolyte throughputs. **Figure 7B** illustrates result for lower Pt catalyst loading (0.8 mg/cm²), resulting in high voltages (1.9-2 V) and low current densities (0.2 A/cm²) in electrolyzer mode, which may result in low cell efficiency and higher voltage compared with oxygen electrodes with LDH that were tested, e.g., in **Figures 6A** and **6B****.** As electrolyzer, device **115** was operated at 60°C with an electrolyte throughput of 0.5 ml/min of 0.05M KOH, and at a current density of 0.2 A/cm². **Figure 7C** illustrates an oxygen electrode made with a catalyst layer of 1 mg/cm² of Pt and 1 mg/cm² of NiFeLDH and 0.06 mg/cm² of ionomer, which showed low performance and instability of the voltage over time at any reasonable current density.

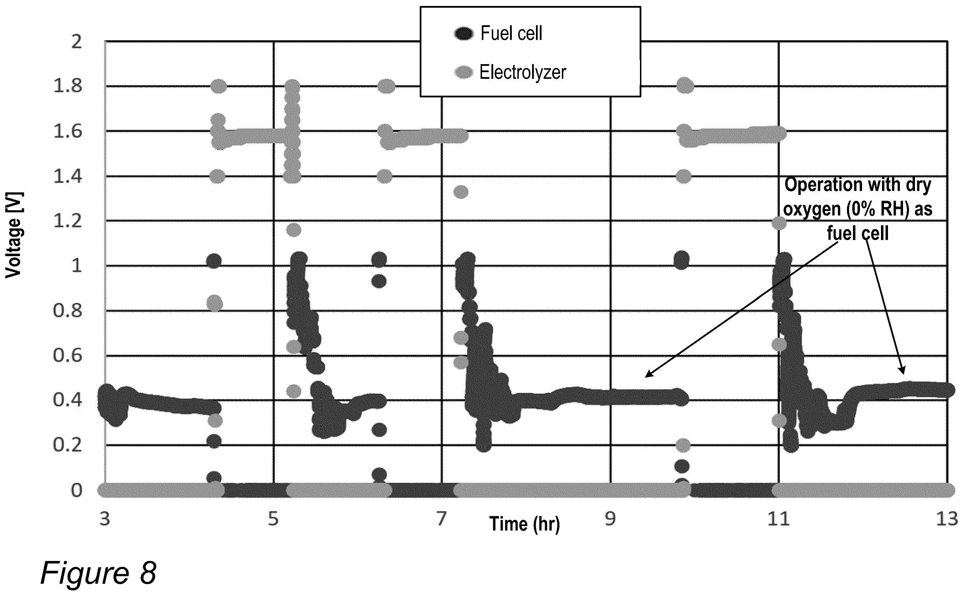

**Figure 8** provides an experimental example for operating reversible device **115** with oxygen electrodes **110** using dry oxygen for the fuel cell operation, according to some embodiments of the invention. The initial test indicates that fuel cell operation under 0% relative humidity (RH) as well as cycling of the electrode (changing operation mode from fuel cell to electrolyzer and back) were possible with disclosed oxygen electrodes **110.** Disclosed reversible device **115** in the example was prepared with oxygen electrodes **110** including PTL **113** with a catalyst blend of platinum nanoparticles and NiFeLDH, and PTFE as binder. As fuel cell, device **115** operated at 70°C at a current of 0.5 A/cm² with dry O₂ and dry H₂; as electrolyzer, device **115** operated at 60°C at a voltage of 1.6V and current of 0.2 A/cm², at an electrolyte throughput of 0.5 ml/min of 0.05M KOH.

Elements from **Figures 1A-1D** and **2** and embodiments described in **Figures 3-8** may be combined in any operable combination, and the illustration of certain elements in certain figures and not in others merely serves an explanatory purpose and is non-limiting. It is noted that disclosed values may be modified by ±10% of the value.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

The following numbered embodiments define various aspects and features of the present invention and correspond to the original claims of the parent EP application 24214354.3 (EP4576278 A1):
1. An oxygen electrode for a reversible, alkaline or anion exchange membrane "AEM" electrochemical device that is operable both as a fuel cell with the oxygen electrode supporting an oxygen reduction reaction "ORR" as a cathode of the fuel cell, and as an electrolyzer with the oxygen electrode supporting an oxygen evolution reaction "OER" as an anode of the electrolyzer, the oxygen electrode comprising:
   a substrate layer that is devoid of elemental carbon, and
   a catalyst layer comprising a blend of an ORR catalyst comprising at least one platinum group metal "PGM" and an OER catalyst comprising at least nickel-based particles, the catalyst layer being devoid of elemental carbon and deposited on the substrate layer.
2. The oxygen electrode of embodiment 1, wherein the OER catalyst comprises nickel iron layered double hydroxide "NiFeLDH".
3. The oxygen electrode of embodiment 1 or 2, wherein the substrate layer comprises a hydrophobized porous transport layer "PTL".
4. The oxygen electrode of embodiment 1 or 2, wherein the substrate layer comprises a membrane, and the oxygen electrode is part of a catalyst coated membrane "CCM".
5. The oxygen electrode of any one of embodiments 1-4, wherein the blend further comprises at least one binder comprising one or more: ionomer, PTFE, and polymer resistant in alkaline environment.
6. The oxygen electrode of any one of embodiments 1-5, further configured to operate with dry oxygen during fuel cell operation of the device.
7. The oxygen electrode of any one of embodiments 1-6, wherein the OER catalyst is selected to not degrade during fuel cell operation of the device, and the ORR catalyst is selected to not degrade during electrolyzer operation of the device.
8. A dual, reversible, alkaline or anion exchange membrane "AEM" electrochemical device that is operable both as a fuel cell and as an electrolyzer, the device comprising:
   the oxygen electrode of any one of embodiments 1-7, and
   an electrode supporting a hydrogen oxidation reaction "HOR" when the device is operated as the fuel cell, and hydrogen evolution reaction "HER" when the device is operated as the electrolyzer.
9. The dual device of embodiment 8, configured to operate with dry oxygen during fuel cell operation of the device.
10. A dual, reversible, alkaline or anion exchange membrane "AEM" electrochemical device that is operable both as a fuel cell and as an electrolyzer, the device comprising the oxygen electrode of embodiment 4, wherein the CCM is coated on one side by the blend of ORR catalyst and OER catalyst, and on another side by a catalyst blend supporting a hydrogen oxidation reaction "HOR" when the device is operated as the fuel cell, and hydrogen evolution reaction "HER" when the device is operated as the electrolyzer, optionally configured to operate with dry oxygen during fuel cell operation of the device.
11. A method of preparing an oxygen electrode for a reversible, alkaline or anion exchange membrane "AEM" electrochemical device that is operable both as a fuel cell with the oxygen electrode supporting an oxygen reduction reaction "ORR" as a cathode of the fuel cell, and as an electrolyzer with the oxygen electrode supporting an oxygen evolution reaction "OER" as an anode of the electrolyzer, the method comprising:
   blending an ORR catalyst comprising at least one platinum group metal "PGM" and an OER catalyst comprising at least nickel-based particles, the blend being devoid of elemental carbon, and
   depositing the blend on a substrate layer to form the oxygen electrode.
12. The method of embodiment 11, wherein the substrate layer comprises a hydrophobized porous transport layer "PTL" or a membrane with the oxygen electrode being part of a catalyst coated membrane "CCM".
13. The method of embodiment 12, wherein the substrate layer comprises a membrane that forms a CCM with the oxygen electrode, the method further comprising coating the CCM on one side by the blend of ORR catalyst and OER catalyst, and on another side by a catalyst blend supporting a hydrogen oxidation reaction "HOR" when the device is operated as the fuel cell, and hydrogen evolution reaction "HER" when the device is operated as the electrolyzer.
14. The method of any one of embodiments 11-13, wherein the blend further comprises at least one binder comprising one or more: ionomer, PTFE, and polymer resistant in alkaline environment.
15. The method of any one of embodiments 11-14, further comprising integrating the oxygen electrode in a reversible device, by selecting the OER catalyst to not degrade during fuel cell operation of the device, wherein the OER catalyst optionally comprises NiFeLDH, and the ORR catalyst to not degrade during electrolyzer operation of the device, wherein the method optionally comprises configuring the oxygen electrode to operate with dry oxygen during fuel cell operation of the device.

## Claims

1. An oxygen electrode for an alkaline or anion exchange membrane "AEM" electrolyzer with the oxygen electrode supporting an oxygen evolution reaction "OER" as an anode of the electrolyzer, the oxygen electrode comprising:
a substrate layer that is devoid of elemental carbon, and
a catalyst layer comprising a blend of an oxygen reduction reaction "ORR" catalyst comprising at least one platinum group metal "PGM" and an OER catalyst comprising at least nickel-based particles, the catalyst layer being devoid of elemental carbon and deposited on the substrate layer.

2. The oxygen electrode of claim 1, wherein the OER catalyst comprises nickel iron layered double hydroxide "NiFeLDH".

3. The oxygen electrode of claim 1 or 2, wherein the substrate layer comprises a porous transport layer "PTL".

4. The oxygen electrode of claim 1 or 2, wherein the substrate layer comprises a membrane, and the oxygen electrode is part of a catalyst coated membrane "CCM".

5. The oxygen electrode of any one of claims 1-4, wherein the blend further comprises at least one binder comprising one or more: ionomer, Polytetrafluoroethylene "PTFE", and polymer resistant in alkaline environment wherein the polymer includes one of: styrene-ethylene-butylene-styrene "SEBS"; styrene-butadiene-styrene "SBS"; polystyrene; polyethylene; polypropylene; ethylene-propylene copolymers; cyclic olefin copolymers "COC"; and polyvinyl butyral.

6. The oxygen electrode of any one of claims 1-5, wherein the ORR catalyst is selected to not degrade during electrolyzer operation of the device.

7. An alkaline or anion exchange membrane "AEM" electrolyzer comprising:
the oxygen electrode of any one of claims 1-6, and
an electrode supporting a hydrogen oxidation reaction "HOR" when the device is operated as the fuel cell, and hydrogen evolution reaction "HER" when the device is operated as the electrolyzer.

8. An alkaline or anion exchange membrane "AEM" electrolyzer, the device comprising the oxygen electrode of claim 4, wherein the CCM is coated on one side by the blend of ORR catalyst and OER catalyst, and on another side by a catalyst blend supporting a hydrogen evolution reaction "HER".

9. A method of preparing an oxygen electrode for an alkaline or anion exchange membrane "AEM" electrolyzer with the oxygen electrode supporting an oxygen evolution reaction "OER" as an anode of the electrolyzer, the method comprising:
blending an oxygen reduction reaction "ORR" catalyst comprising at least one platinum group metal "PGM" and an OER catalyst comprising at least nickel-based particles, the blend being devoid of elemental carbon, and
depositing the blend on a substrate layer to form the oxygen electrode.

10. The method of claim 9, wherein the substrate layer comprises a hydrophobized porous transport layer "PTL" or a membrane with the oxygen electrode being part of a catalyst coated membrane "CCM".

11. The method of claim 9, wherein the substrate layer comprises a membrane that forms a CCM with the oxygen electrode, the method further comprising coating the CCM on one side by the blend of ORR catalyst and OER catalyst, and on another side by a catalyst blend supporting a hydrogen evolution reaction "HER".

12. The method of any one of claims 9-11, wherein the blend further comprises at least one binder comprising one or more: ionomer, Polytetrafluoroethylene "PTFE", and polymer resistant in alkaline environment, wherein the polymer includes one of: styrene-ethylene-butylene-styrene "SEBS", styrene-butadiene-styrene "SBS", polystyrene, polyethylene, polypropylene, ethylene-propylene copolymers, cyclic olefin copolymers "COC", and polyvinyl butyral.

13. The method of any one of claims 9-12, further comprising integrating the oxygen electrode in the electrolyzer, wherein the OER catalyst optionally comprises NiFeLDH, and the ORR catalyst is selected to not degrade during operation of the device.

14. The method of any one of claims 9-13, wherein the substrate layer is hydrophobized for said catalyst blend by hydrophobic binder(s), such as PTFE, to form hydrophobic catalyst layer (113).
